# EUROPEAN PATENT APPLICATION

(11) **EP 3 369 831 A1**
(43) Date of publication of application: **05.09.2018**
(21) Application number: 16859940.5
(22) Date of filing: 28.10.2016
(51) Int. Cl.: C22C 1/05, B22F 1/00, B22F 3/14, B22F 3/24, B22F 9/04, B23B 27/14, B23B 27/20, C22C 19/00

(54) **SINTERED COMPACT AND METHOD FOR PRODUCING SAME**

(30) Priority: 30.10.2015 JP 2015214681
(71) Applicant: Sumitomo Electric Industries, Ltd., Osaka-shi, Osaka 541-0041 (JP)
(72) Inventor: ISHII, Akito, Itami-shi Hyogo 664-0016 (JP); WATANOBE, Naoki, Itami-shi Hyogo 664-0016 (JP); HARADA, Takashi, Itami-shi Hyogo 664-0016 (JP); KUKINO, Satoru, Itami-shi Hyogo 664-0016 (JP)
(74) Representative: Boult Wade Tennant LLP
(86) International application number: PCT/JP2016/082010
(87) International publication number: WO 2017/073712

(57) **Abstract**

A sintered material contains hard particles composed of one or more selected from the group consisting of cubic boron nitride, Al₂O₃, AlON, SiAlON, TiC, TiCN, TiN, WC, and diamond, a metallic binder phase mainly composed of Co or Ni and containing at least one element selected from the group consisting of Co, Ni, Al, W, V, and Ti, and Al₂O₃ dispersed in the metallic binder phase.

## Description

### TECHNICAL FIELD

The present invention relates to a sintered material and a method of manufacturing the same.

The present application claims priority to Japanese Patent Application No. 2015-214681 filed on October 30, 2015, the entire contents of which are hereby incorporated by reference.

### BACKGROUND ART

In order to improve cutting performance of a sintered material such as boron nitride (cBN) or cermet, the sintered material has been coated with TiN or Al₂O₃ (PTD 1: Japanese Patent Laying-Open No. 59-8679).

### CITATION LIST

### PATENT DOCUMENT

PTD 1: Japanese Patent Laying-Open No. 59-8679

### SUMMARY OF INVENTION

### TECHNICAL PROBLEM

It has been difficult, however, to sufficiently maintain heat resistance, wear resistance, and chipping resistance. In particular in recent years, improvement in performance of a cutting tool for a difficult-to-machine material such as a heat-resistant alloy has more strongly been demanded.

In view of the circumstances, an object of the present invention is to provide a sintered material excellent in heat resistance, wear resistance, and chipping resistance when used as a material for a tool and a method of manufacturing the same.

### SOLUTION TO PROBLEM

The first invention of the present application is directed to (1) a sintered material including hard particles composed of one or more selected from the group consisting of cubic boron nitride, Al₂O₃, AlON, SiAlON, TiC, TiCN, TiN, WC, and diamond, a metallic binder phase mainly composed of Co or Ni and containing at least one element selected from the group consisting of Co, Ni, Al, W, V, and Ti, and Al₂O₃ dispersed in the metallic binder phase.

### ADVANTAGEOUS EFFECTS OF INVENTION

According to the present invention, a sintered material excellent in heat resistance, wear resistance, and chipping resistance when used as a material for a tool can be obtained.

### DESCRIPTION OF EMBODIMENTS

### [Description of Embodiment of the Invention of the Present Application]

Contents of an embodiment of the invention of the present application will initially be listed and described.

The invention according to the embodiment of the present application is directed to (1) a sintered material including hard particles composed of one or more selected from the group consisting of cubic boron nitride (cBN), Al₂O₃, AlON, SiAlON, TiC, TiCN, TiN, tungsten carbide (WC), and diamond, a metallic binder phase mainly composed of Co or Ni and containing at least one element selected from the group consisting of Co, Ni, Al, W, V, and Ti, and Al₂O₃ dispersed in the metallic binder phase. Such a sintered material is excellent in heat resistance, wear resistance, and chipping resistance when used as a material for a tool. The metallic binder phase can also contain an intermetallic compound phase expressed as (Co, Ni)₃(Al, W, V, Ti).
(2) Preferably, the hard particles and the metallic binder phase are contained as being dispersed in the sintered material. Thus, heat resistance of the sintered material is improved and wear resistance at a high temperature is improved.
(3) Preferably, in the metallic binder phase, a content of Co is from 0 to 90 mass %, a content of Ni is from 0 to 90 mass %, a content of Al is from 0.1 to 40 mass %, a content of W is from 0 to 45 mass %, a content of V is from 0 to 25 mass %, a content of Ti is from 0 to 25 mass %, and a ratio of a total of Al, W, V, and Ti is not higher than 50 mass %. Thus, an intermetallic compound phase (a precipitated phase of (Co, Ni)₃(Al, W, V, Ti)) high in hardness at a high temperature is precipitated after aging treatment, and a hardness at a high temperature of the sintered material can be enhanced.
(4) Preferably, an average crystal grain size of Al₂O₃ dispersed in the metallic binder phase is not greater than 0.5 µm. Thus, in addition to heat resistance, a hardness and strength of the sintered material are improved.
(5) Preferably, the average crystal grain size of Al₂O₃ dispersed in the metallic binder phase is not greater than 0.05 µm. Thus, in addition to heat resistance, a hardness and strength of the sintered material are further improved.
(6) Preferably, the average crystal grain size of Al₂O₃ dispersed in the metallic binder phase is not greater than 0.01 µm. Thus, in addition to heat resistance, a hardness and strength of the sintered material are still further improved.
(7) Preferably, an average particle size of the hard particles is from 0.1 to 10 µm and a content of the hard particles in the sintered material is from 50 to 99 volume %. With such a range of particle sizes and composition, a hardness of the obtained sintered material is enhanced.
(8) Preferably, when the hard particles contain cBN, a content of each of Cr, Mo, V, and Zr in the metallic binder phase is not higher than 10 mass %. When an amount of addition of any of Cr, Mo, V, and Zr exceeds 10 mass %, cBN may be changed to soft hexagonal boron nitride (hBN) during sintering or aging treatment due to a catalytic reaction of Cr, Mo, V, and Zr.
(9) Preferably, the metallic binder phase contains a y phase which is a matrix phase composed of Co and Ni and an intermetallic compound phase of (Co, Ni)₃(Al, W, V, Ti). A hardness at a high temperature of the sintered material can thus be enhanced. The intermetallic compound phase refers to a precipitated phase having excellent high-temperature strength characteristics such as an L1₂ structure (a γ' phase) represented by Ni₃Al, a D0₂₂ phase (a γ" phase) represented by Ni₃V, and a D0₂₄ structure represented by Ni₃Ti.
(10) The present invention also relates to a method of manufacturing the sintered material described above, and the method includes synthesizing a metallic binder phase containing Co, Ni, Al, W, V, and Ti, obtaining powders of the metallic binder phase to which oxygen is adsorbed by milling the metallic binder phase in the atmosphere or drying the metallic binder phase in the atmosphere after milling of the metallic binder phase, obtaining mixed powders by mixing the powders of the metallic binder phase and powders of the hard particles, sintering the mixed powders under a condition of 10 MPa to 16 GPa and 1000 to 1800°C, and performing aging treatment at 500 to 1100°C after sintering. As a result of sintering at a pressure from 10 MPa to 16 GPa and a temperature from 1000 to 1800°C, a dense sintered material of hard particles and the metallic binder phase can be formed. Furthermore, as a result of reaction between oxygen adsorbed to the metallic binder phase and Al in the metallic binder phase, fine Al₂O₃ is precipitated and a sintered material high in heat resistance can be formed. As a result of aging treatment, an intermetallic compound phase (a precipitated phase of (Co, Ni)₃(Al, W, V, Ti)) high in hardness at a high temperature is formed in the y phase (a matrix phase mainly composed of Co and Ni high in toughness), and a sintered material high in hardness at a high temperature can be formed.

### [Details of Embodiment of the Invention of the Present Application]

The sintered material according to the present invention contains hard particles composed of one or more selected from the group consisting of cubic boron nitride, Al₂O₃, AlON, SiAlON, TiC, TiCN, TiN, WC, and diamond, a metallic binder phase mainly composed of Co or Ni and containing at least one element selected from the group consisting of Co, Ni, Al, W, V, and Ti or the metallic binder phase and an intermetallic compound phase expressed as (Co, Ni)₃(Al, W, V, Ti), and Al₂O₃ dispersed in the metallic binder phase.

The intermetallic compound phase of (Co, Ni)₃(Al, W, V, Ti) means an intermetallic compound phase mainly having such an elemental composition that a ratio between a total of Co and Ni and a total of Al, W, V, and Ti is 3:1. An expression as (Co, Ni)₃(Al, W, V, Ti) shows an optimal intermetallic compound phase, and Co, W, V, and Ti do not have to be contained.

The hard particles and the metallic binder phase are preferably contained as being dispersed in the sintered material. Thus, heat resistance is improved and wear resistance at a high temperature, for example, during cutting, is improved. Both of the hard particles and the intermetallic compound phase of (Co, Ni)₃(Al, W, V, Ti) are preferably contained as being dispersed in the sintered material together with the y phase representing the matrix phase composed of Co and Ni. A sintered material achieving both of a hardness at a high temperature and chipping resistance can thus be obtained. The hard particles and the intermetallic compound phase are more preferably contained as being uniformly dispersed in the sintered material. Being dispersed herein refers to presence of phases in the sintered material without being in contact with each other.

In one embodiment of the present invention, initially, Co, Ni, Al, W, V, and Ti are employed as source materials to fabricate a metallic binder phase through atomization, arc melting, or plasma treatment.

Preferably, with respect to a total amount of the metallic binder phase, a content of Co is from 0 to 90 mass %, a content of Ni is from 0 to 90 mass %, a content of Al is from 0.1 to 40 mass %, a content of W is from 0 to 45 mass %, a content of V is from 0 to 25 mass %, a content of Ti is from 0 to 25 mass %, and a ratio of a total of Al, W, V, and Ti is not higher than 50 mass %. Thus, an intermetallic compound phase (a precipitated phase of (Co, Ni)₃(Al, W, V, Ti)) high in hardness at a high temperature is precipitated after aging treatment, and a hardness at a high temperature of the sintered material can be enhanced. More preferably, a content of Co is from 1 to 50 mass %, a content of Ni is from 1 to 50 mass %, a content of Al is from 0.1 to 15 mass %, and a content of W is from 3 to 45 mass %.

In fabricating powders of the metallic binder phase, Nb, Ta, B, or C may be added in addition to Co, Ni, Al, W, V, and Ti. When cBN is employed for hard particles, an amount of addition of each of Cr, Mo, V, and Zr with respect to the total amount of the metallic binder phase is preferably not higher than 10 mass %. When an amount of addition of any of Cr, Mo, V, and Zr exceeds 10 mass %, cBN may be changed to soft hexagonal boron nitride (hBN) during sintering or aging treatment due to a catalytic reaction of Cr, Mo, V, and Zr. Aging treatment (aging hardening treatment, precipitation heat treatment) herein means treatment for soaking and holding a product subjected to solution treatment (solution heat treatment) at a temperature appropriate for promotion of a hardness, strength, or corrosion resistance or at a room temperature for a certain type of alloy or a temper (see JIS W 1103).

When cBN is employed for the hard particles, the metallic binder phase is preferably high in concentration of B around the hard particles.

When Al₂O₃, AlON, or SiAlON is employed for the hard particles, the metallic binder phase is preferably higher in concentration of Al around the hard particles than in other regions.

When TiC, TiCN, or TiN is employed for the hard particles, the metallic binder phase is preferably higher in concentration of Ti around the hard particles than in other regions.

When WC is employed for the hard particles, the metallic binder phase is preferably higher in concentration of W around the hard particles than in other regions.

In addition to the above, TiAlN or AlCrN may be employed for the hard particles. When TiAlN is employed, the metallic binder phase is preferably higher in concentration of Al and Ti around the hard particles than in other regions. When AlCrN is employed, preferably, the metallic binder phase is higher in concentration of Al and Cr around the hard particles than in other regions, and forms (Co, Ni, Cr)₃(Al, W, V, Ti).

Aluminum boride of a metal represented by Ni₂₀Al₃B₆ may be generated in the sintered material through a sintering process or an aging treatment process. By forming such aluminum boride, binding force between the metallic binder phase and cBN is strengthened and a sintered material excellent in chipping resistance is obtained.

The obtained metallic binder phase is crushed, for example, with a bead mill, a ball mill, or a jet mill, into powders of the metallic binder phase. An average particle size of the powders of the metallic binder phase is preferably from 0.3 to 3 µm. Examples of beads/balls used in the bead mill/ball mill include beads/balls made of alumina, silicon nitride, or cemented carbide having a particle size from 0.1 to 3 mm, and examples of a dispersion medium include ethanol, acetone, and liquid nitrogen. A time period for treatment with the bead mill/ball mill is set, for example, to 30 minutes to 100 hours. Slurry obtained by using the bead mill/ball mill is dried, for example, in the atmosphere. As a result of milling and drying in the atmosphere with time being spent, oxygen in air is adsorbed, adsorbed oxygen and Al in the metallic binder phase react with each other during sintering, and Al₂O₃ can be precipitated. When milling is performed with a jet mill in another method, powders of the metallic binder phase to which oxygen has been adsorbed can be obtained also by using air as a source of milling gas and setting a long time period for milling. As will be described later, the metallic binder phase in which Al₂O₃ is dispersed can be obtained also by directly adding Al₂O₃ powders. Precipitation of Al₂O₃ as with the present technique, however, is preferred because a particle size of Al₂O₃ can be finer. An amount of oxygen contained in the metallic binder phase is more preferably not lower than 6 mass %.

Then, the obtained powders of the metallic binder phase and powders of the hard particles are mixed in a ball mill or a mortar. cBN is extremely high in hardness and exhibits high cutting performance as a tool. Since Al₂O₃, AlON, TiC, TiCN, TiN, TiAlN, and AlCrN have such a physical property as being resistant to reaction with and wear by Fe, they are suitable for a work material such as cast iron, steel, and hardened steel which contain Fe. Since SiAlON (including any crystal structure of α, β, and cubic structure) has such a physical property as being resistant to reaction with and wear by Ni, it is suitable for a heat-resistant alloy such as Inconel®. In addition to these hard particles, hard particles of Mo₂C, Cr₃C₂, TaC, NbC, VC, HfC, ZrC, A1N, CrN, TaN, NbN, VN, HfN, or ZrN may be added. When TiC, TiCN, or TiN is employed for the hard particles, Ni more than Co is desirably contained because binding force between the hard particles and a metallic binder is stronger and chipping resistance is higher. Examples of balls used in a ball mill include balls made of alumina, silicon nitride, or cemented carbide having a diameter of 3 mm, and examples of a dispersion medium include ethanol, acetone, and liquid nitrogen. A time period for treatment is set, for example, to 3 to 20 hours. Slurry obtained by mixing is dried, for example, in the atmosphere to obtain mixed powders. In mixing, fine powders of Al₂O₃ (0.01 to 0.5 µm) may be added as Al₂O₃ dispersed in the metallic binder phase.

The obtained mixed powders are introduced in a Ta capsule and a sintered material is formed by pressing. Sintering at a pressure from 10 MPa to 16 GPa and a temperature from 1000 to 1800°C is preferred. Thus, the hard particles and the metallic binder phase are densely sintered and fine Al₂O₃ is precipitated in the metallic binder phase, so that a sintered material achieving improved heat resistance can be formed.

After sintering, aging treatment may be performed at 500 to 1100°C for 1 to 24 hours. Thus, an intermetallic compound phase (a precipitated phase of (Co, Ni)₃(Al, W, V, Ti)) high in hardness at a high temperature is formed in the y phase (the matrix phase mainly composed of Co and Ni high in toughness) and a sintered material high in hardness at a high temperature can be formed. The intermetallic compound phase alone disadvantageously tends to suffer from brittleness at grain boundaries.

According to the present invention, however, for example, through aging treatment in a state sintered with cBN, an effect of addition of boron to grain boundaries is exhibited and a sintered material of cBN is particularly less likely to suffer from grain boundary fracture than a conventional tool. Therefore, a sintered material achieving both of a hardness at a high temperature and chipping resistance can be obtained.

When Al₂O₃, AlON, or SiAlON is employed for the hard particles, a region higher in concentration of Al than other regions is formed between the hard particles and the metallic binder phase and a large number of precipitated phases of (Co, Ni)₃(Al, W, V, Ti) are formed. Therefore, binding force between the hard particles and the metallic binder phase is increased and a sintered material high in chipping resistance can be obtained.

When TiC, TiCN, or TiN is employed for the hard particles, a region high in concentration of Ti is formed between the hard particles and the metallic binder phase and a precipitated phase of (Co, Ni)₃(Al, W, V, Ti) is formed. Binding force between the hard particles and the metallic binder phase is increased and a sintered material high in chipping resistance can be obtained.

When WC is employed for the hard particles, a region higher in concentration of W than other locations is formed between the hard particles and the metallic binder phase and a large number of precipitated phases of (Co, Ni)₃(Al, W, V, Ti) are formed. Therefore, binding force between the hard particles and the metallic binder phase is increased and a sintered material high in chipping resistance can be obtained.

When TiAlN is employed for the hard particles, a concentration of Al and Ti is higher between the hard particles and the metallic binder phase than in other locations and (Co, Ni)₃(Al, W, V, Ti) is formed. Therefore, binding force between the hard particles and the metallic binder phase is increased and a sintered material high in chipping resistance can be obtained.

When AlCrN is employed for the hard particles, a concentration of Al and Cr is higher between the hard particles and the metallic binder phase than in other locations and (Co, Ni, Cr)₃(Al, W, V, Ti) is formed. Therefore, binding force between the hard particles and the metallic binder phase is increased and a sintered material high in chipping resistance can be obtained.

When diamond is employed for the hard particles, between the hard particles and the metallic binder phase, a concentration of C is higher than in other locations and (Co, Ni)₃(Al, W, C) is formed. Therefore, binding force between the hard particles and the metallic binder phase is increased and a sintered material high in chipping resistance can be obtained.

An average crystal grain size of the intermetallic compound phase is preferably from 0.03 to 1.0 µm. Within this range, a hardness at a high temperature of the obtained sintered material is enhanced.

An average particle size of the hard particles is preferably from 0.1 to 10 µm, and a content of the hard particles in the sintered material is preferably from 50 to 99 volume %. With such a range of particle sizes and composition, a hardness of the obtained sintered material is enhanced. An average particle size of the hard particles can be measured with a particle size distribution analyzer such as Microtrac.

The sintered material according to the present invention may contain B, N, O, or the like as an inevitable impurity so long as the effect of the present invention is not impaired.

### Examples

Though the present invention will be described below in detail with reference to Examples, the Examples are by way of example and the scope of the present invention is not limited thereto.

### [Examples 1 to 39 and Comparative Examples 1 to 4]

### (Fabrication of Powders)

Co, Ni, Al, and W (also V, Nb, Cr, or Zr in Examples 26 to 29) were mixed at a ratio shown in the field of "metallic binder phase composition (mass %)" in Tables 1 and 2 and the metallic binder phase was fabricated through atomization. The metallic binder phase was crushed with a bead mill with the use of alumina beads having a diameter of 0.5 mm. Obtained slurry was dried in the atmosphere to obtain powders of the metallic binder phase.

Then, the powders of the metallic binder phase and powders of the hard particles shown in Tables 1 and 2 were introduced in the ball mill together with ethanol and balls having a diameter of 3 mm and made of cemented carbide, and mixed for five hours. Obtained slurry was dried in the atmosphere to obtain mixed powders. In Examples 20 and 21, milling was not performed but fine powders of Al₂O₃ (having an average particle size of 0.5 µm in Example 20 and 0.1 µm in Example 21) were added in mixing with the method the same as described above. In Comparative Examples 1 to 4, milling was not performed.

### (Fabrication of Sintered Material)

Then, a capsule made of tantalum was filled with the obtained mixed powders and sintering treatment was performed at a pressure and a temperature shown in the field of "sintering condition" in Tables 1 and 2 with a press machine. The sintered material was thus fabricated.

### (Aging Treatment)

In Examples 5 to 7, 11 to 13, 17, 18, 37, and 39, the obtained sintered material was subjected to aging treatment at a temperature and for a time period shown in the field of "aging heat treatment" in Tables 1 and 2 in an argon atmosphere furnace to precipitate the intermetallic compound phase.

### (Measurement of Sintered Material)

Average crystal grain sizes of Al₂O₃ dispersed in the metallic binder phase and the intermetallic compound phase were measured based on an image picked up by an SEM after the sintered material was polished. Specifically, the number of crystal grains N within a measurement area in the image picked up by the SEM was counted, and an area A_{g} per one crystal grain was calculated by dividing a total area A_{M} of the measurement area by the number of crystal grains N. Assuming a shape of a crystal grain as circular, a radius was calculated from A_{g} and a value thereof was defined as an average crystal grain size d_{AVE}.

It was confirmed that cBN was not changed to hexagonal boron nitride (hBN) low in hardness in a sample containing cBN as the hard particles by measuring an XRD intensity.

### (Fabrication of Cutting Tool)

The obtained sintered material was cut through wire-electric discharge machining and finished to fabricate a cutting tool having a tip end nose R of 0.8 mm.

Cutting tools as described above were fabricated by using 80 volume % of cBN and 20 volume % of uncrushed powders of the metallic binder phase in Comparative Example 1 and by using cermet composed of 80 volume % of TiC (titanium carbide) and 20 volume % of Ni in Comparative Example 2. As shown in Table 2, the cutting tools as described above were fabricated with a diamond sintered material composed of 90 volume % of diamond and 10 volume % of Co in Comparative Examples 3 and 4.

### (Cutting Test 1)

The obtained cutting tool was used to conduct a cutting test under cutting conditions below in Examples 1 to 29 and Comparative Example 1 with an NC lathe and Inconel® 718 (a trademark manufactured by International Nickel Company) as a work material, and a flank wear width (µm) of a flank face of each cutting tool after cutting by 0.7 km was measured.
Cutting speed: 200 m/min.
Depth of cutting: 0.2 mm
Feed rate: 0.1 mm/rev
Cutting fluid: used
Tables 1 and 2 show results.

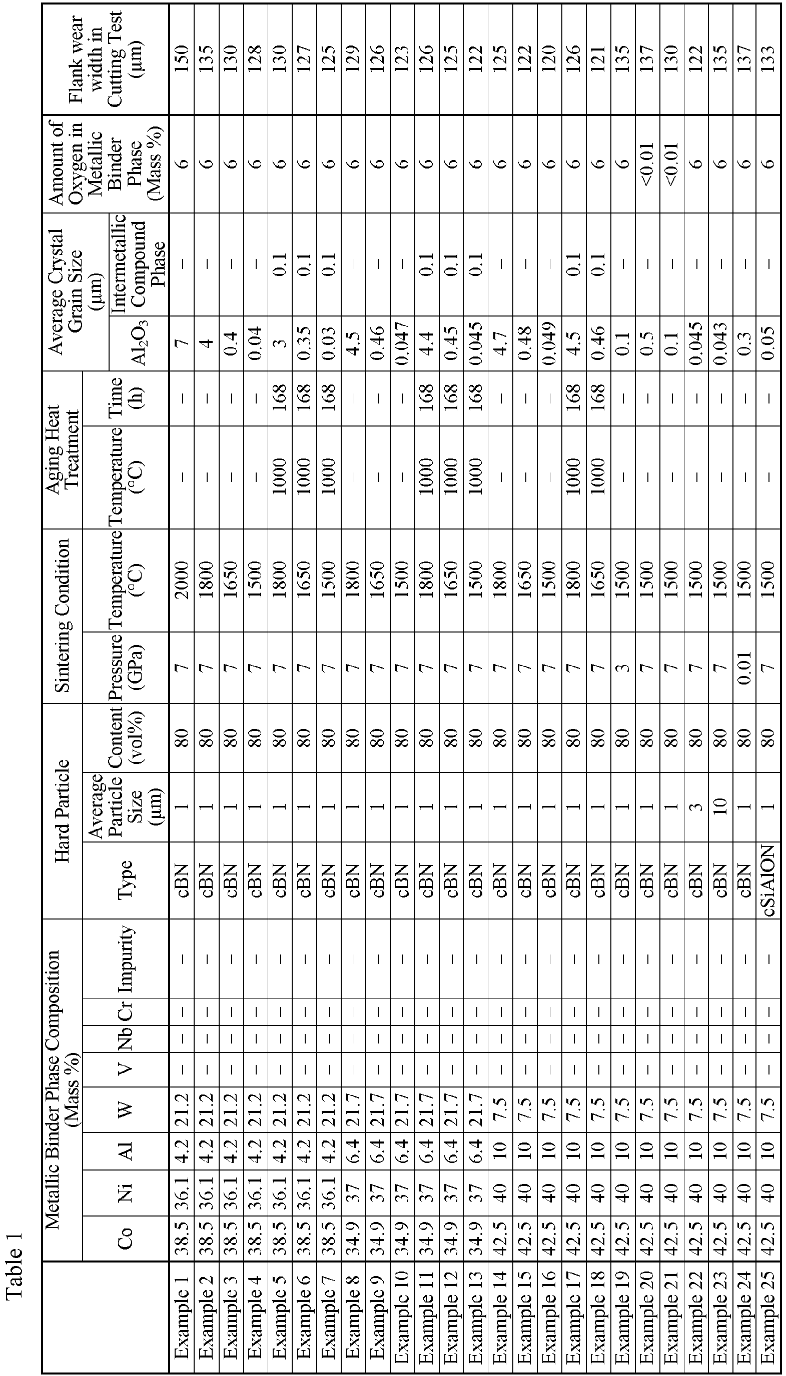

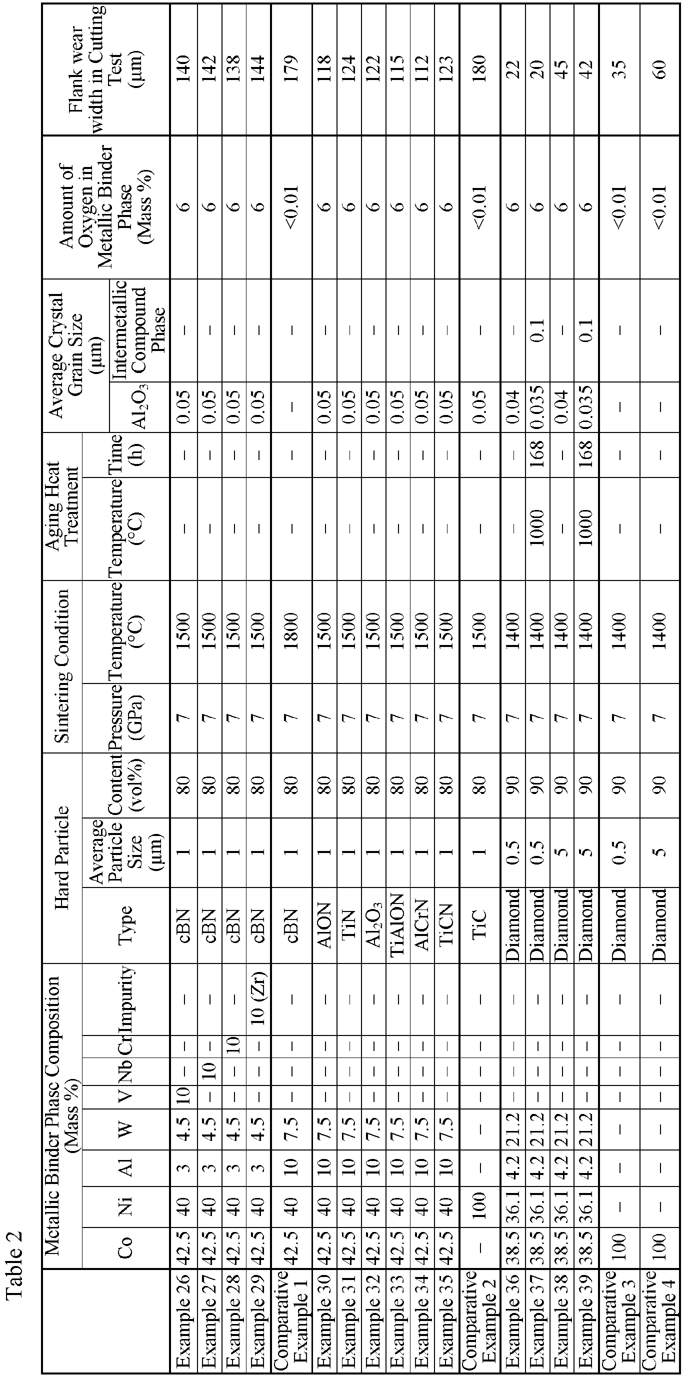

### (Evaluation Result 1)

The sintered materials and the cutting tools in Examples 1 to 29 were higher in wear resistance to a heat-resistant alloy than the sintered material and the cutting tool in Comparative Example 1. Example 16 in which Al₂O₃ was not added was finer in particle size of Al₂O₃ and exhibited higher performance than Examples 20 and 21 in which Al₂O₃ was directly added as a source material of Al₂O₃.

### (Cutting Test 2)

The obtained cutting tool was used to conduct a cutting test under cutting conditions below in Examples 30 to 35 and Comparative Example 2 with an NC lathe and hardened steel SCM 415 as a work material, and a flank wear width (µm) of a flank face of each cutting tool after cutting by 3.0 km was measured.
Cutting speed: 100 m/min.
Depth of cutting; 0.1 mm
Feed rate: 0.1 mm/rev
Cutting fluid: used
Table 2 shows results.

### (Evaluation Result 2)

The sintered materials and the cutting tools in Examples 30 to 35 were higher in wear resistance to hardened steel than the sintered material and the cutting tool in Comparative Example 2.

### (Cutting Test 3)

The obtained cutting tool was used to conduct a cutting test under cutting conditions below in Examples 36 to 39 and Comparative Examples 3 and 4 with an NC lathe and an aluminum alloy A390 (a 17% Si-Al alloy) as a work material, and a flank wear width (µm) of a flank face of each cutting tool after cutting by 5.0 km was measured.
Cutting speed: 500 m/min.
Depth of cutting; 0.5 mm
Feed rate: 0.12 mm/rev
Cutting fluid: used
Table 2 shows results.

### (Evaluation Result 3)

The sintered materials and the cutting tools in Examples 36 to 39 were higher in wear resistance to an aluminum alloy than the sintered materials and the cutting tools in Comparative Examples 3 and 4.

### [Examples 40 and 41 and Comparative Examples 5 and 6]

Co, Ni, Al, and W were mixed at a ratio shown in the field of "metallic binder phase composition (mass %)" in Table 3 and the metallic binder phase was fabricated through atomization. The metallic binder phase was crushed with a bead mill with the use of alumina beads having a diameter of 0.5 mm. Obtained slurry was dried in the atmosphere to obtain powders of the metallic binder phase.

Then, the powders of the metallic binder phase and powders of the hard particles shown in Table 3 were introduced in the ball mill together with ethanol and balls having a diameter of 3 mm and made of cemented carbide, and mixed for five hours. Obtained slurry was dried in the atmosphere to obtain mixed powders. In Comparative Examples 5 and 6, milling was not performed.

### (Fabrication of Sintered Material)

Then, a capsule made of tantalum was filled with the obtained mixed powders and sintering treatment was performed at a pressure and a temperature shown in the field of "sintering condition" in Table 3 with a press machine. The sintered material was thus fabricated.

### (Measurement of Sintered Material)

An average crystal grain size of Al₂O₃ dispersed in the metallic binder phase was measured based on an image picked up by an SEM after the sintered material was polished. Specifically, the number of crystal grains N within a measurement area in the image picked up by the SEM was counted, and area A_{g} per one crystal grain was calculated by dividing total area A_{M} of the measurement area by the number of crystal grains N. Assuming a shape of a crystal grain as circular, a radius was calculated from A_{g} and a value thereof was defined as average crystal grain size d_{AVE}.

It was confirmed that cBN was not changed to hexagonal boron nitride (hBN) low in hardness in a sample containing cBN as the hard particles by measuring an XRD intensity.

### (Fabrication of Cutting Tool)

The obtained sintered material was cut through wire-electric discharge machining and finished to fabricate a cutting tool having a tip end nose R of 0.8 mm.

### (Cutting Test 4)

The obtained cutting tool was used to conduct a cutting test under cutting conditions below in Examples 40 and 41 and Comparative Examples 5 and 6 with an NC lathe and Inconel® 718 (a trademark manufactured by International Nickel Company) as a work material, and a flank wear width (µm) of a flank face of each cutting tool after cutting by 0.12 km was measured.
Cutting speed: 40 m/min.
Depth of cutting: 1.0 mm
Feed rate: 0.2 mm/rev
Cutting fluid: used
Table 3 shows results.

### (Evaluation Result 4)

The sintered materials and the cutting tools in Examples 40 and 41 were higher in wear resistance to a heat-resistant alloy than the sintered materials and the cutting tools in Comparative Examples 5 and 6.

**Table 3**

| | Metallic Binder Phase Composition (Mass %) | | | | Hard Particle | | | Sintering Condition | | Average Crystal Grain Size of Al₂O₃ (µm) | Amount of Oxygen in Metallic Binder Phase (Mass %) | Flank wear width in Cutting Test (µm) |
|---|---|---|---|---|---|---|---|---|---|---|---|---|
| | Co | Ni | Al | W | Type | Average Particle Size (µm) | Content (vol%) | Pressure (GPa) | Temperature (°C) | | | |
| Example 40 | 38.5 | 36.1 | 4.2 | 21.2 | WC | 1 | 80 | Atmospheric Pressure | 1400 | 0.05 | 6 | 350 |
| Example 41 | 38.5 | 36.1 | 4.2 | 21.2 | WC | 1 | 80 | 7 | 1400 | 0.05 | 6 | 343 |
| Comparative Example 5 | 100 | - | - | - | WC | 1 | 80 | Atmospheric Pressure | 1400 | - | <0.01 | 450 |
| Comparative Example 6 | 100 | - | - | - | WC | 1 | 80 | 7 | 1400 | - | <0.01 | 436 |

It should be understood that the embodiment and the examples disclosed herein are illustrative and non-restrictive in every respect. The scope of the present invention is defined by the terms of the claims, rather than the description above, and is intended to include any modifications within the scope and meaning equivalent to the terms of the claims.

### INDUSTRIAL APPLICABILITY

The sintered material according to the present invention can widely be used for a cutting tool, and a smooth cut surface can be formed on a surface of a work material over a long distance. In particular, the sintered material can suitably be used for a cutting tool for cutting a work material high in hardness at a high temperature, a work material made of a heat-resistant alloy, and a work material containing an iron-based material.

## Claims

1. A sintered material comprising:
hard particles composed of one or more selected from the group consisting of cubic boron nitride, Al₂O₃, AlON, SiAlON, TiC, TiCN, TiN, WC, and diamond;
a metallic binder phase mainly composed of Co or Ni and containing at least one element selected from the group consisting of Co, Ni, Al, W, V, and Ti; and
Al₂O₃ dispersed in the metallic binder phase.

2. The sintered material according to claim 1, wherein
the hard particles and the metallic binder phase are comprised as being dispersed in the sintered material.

3. The sintered material according to claim 1 or 2, wherein
in the metallic binder phase, a content of Co is from 0 to 90 mass %, a content of Ni is from 0 to 90 mass %, a content of Al is from 0.1 to 40 mass %, a content of W is from 0 to 45 mass %, a content of V is from 0 to 25 mass %, a content of Ti is from 0 to 25 mass %, and a ratio of a total of Al, W, V, and Ti is not higher than 50 mass %.

4. The sintered material according to any one of claims 1 to 3, wherein
an average precipitation particle size of Al₂O₃ dispersed in the metallic binder phase is not greater than 0.5 µm.

5. The sintered material according to claim 4, wherein
the average precipitation particle size of Al₂O₃ dispersed in the metallic binder phase is not greater than 0.05 µm.

6. The sintered material according to claim 5, wherein
the average precipitation particle size of Al₂O₃ dispersed in the metallic binder phase is not greater than 0.01 µm.

7. The sintered material according to any one of claims 1 to 6, wherein
an average particle size of the hard particles is from 0.1 to 10 µm and a content of the hard particles in the sintered material is from 50 to 99 volume %.

8. The sintered material according to any one of claims 1 to 7, wherein
when the hard particles contain cubic boron nitride, a content of each of Cr, Mo, V, and Zr in the metallic binder phase is not higher than 10 mass %.

9. The sintered material according to any one of claims 1 to 8, wherein
the metallic binder phase contains a y phase which is a matrix phase composed of Co and Ni and an intermetallic compound phase which is a precipitated phase of (Co, Ni)₃(Al, W, V, Ti).

10. A method of manufacturing the sintered material according to claim 1 comprising:
synthesizing a metallic binder phase containing Co, Ni, Al, W, V, and Ti;
obtaining powders of the metallic binder phase to which oxygen is adsorbed by milling the metallic binder phase in atmosphere or drying the metallic binder phase in atmosphere after milling of the metallic binder phase;
obtaining mixed powders by mixing the powders of the metallic binder phase and powders of the hard particles;
sintering the mixed powders under a condition of 10 MPa to 16 GPa and 1000 to 1800°C; and
performing aging treatment at 500 to 1800°C after sintering.
